# EUROPEAN PATENT SPECIFICATION

(11) **EP 2 364 400 B1**
(45) Date of publication and mention of the grant of the patent: **17.08.2016**
(21) Application number: 09752677.6
(22) Date of filing: 12.11.2009
(51) Int. Cl.: F02C 3/20

(54) **ULTRA-LOW SULFUR FUEL AND METHOD FOR REDUCED CONTRAIL FORMATION**
TREIBSTOFF MIT ULTRANIEDRIGEM SCHWEFELGEHALT UND VERFAHREN ZUR BILDUNG REDUZIERTER KONDENSSTREIFEN
COMBUSTIBLE À TRÈS FAIBLE TENEUR EN SOUFRE ET PROCÉDÉ POUR RÉDUIRE LA FORMATION DE TRAÎNÉE DE CONDENSATION

(30) Priority: 14.11.2008 US 114486 P; 09.11.2009 US 614640
(43) Date of publication of application: 14.09.2011
(73) Proprietor: United Technologies Corporation, Hartford, CT 06101 (US); Aerodyne Research, Inc., Billerica, MA 01821-3976 (US)
(72) Inventor: EPSTEIN, Alan, Lexington Massachusetts 02421 (US); MIAKE-LYE, Richard C., Lexington Massachusetts 02421 (US)
(74) Representative: de Bresser, Sara Jean
(86) International application number: PCT/US2009/064153
(87) International publication number: WO 2010/056819

(56) References cited:
- US-A- 4 766 725
- US-A- 6 162 956
- Hemighaus G. et al: "Alternative Jet Fuels", Chevron Corporation , 1 October 2006 (2006-10-01), XP002620000, Retrieved from the Internet: URL:http://www.chevronglobalaviation.com/d ocs/5719_Aviation_Addendum._webpdf.pdf [retrieved on 2011-02-01]
- MUSHRUSH G W ET AL: "Stability studies of a jet fuel containing no organosulfur compounds", PETROLEUM SCIENCE AND TECHNOLOGY, MARCEL DEKKER, NEW YORK, NY, US, vol. 20, no. 5,6, 1 January 2002 (2002-01-01), pages 561-570, XP002967605, ISSN: 1091-6466, DOI: DOI:10.1081/LFT-120003580
- SCHUMANN U. ET AL: "In situ observations of particles in jet aircraft exhausts and contrails for different sulfur-containing fuels", Deutsche Forschungsanstalt für Luft- und Raumfahrt (DLR), Institut für Physik der Atmosphäre JOURNAL OF GEOPHYSICAL RESEARCH, vol. 101, no. D3 20 March 1996 (1996-03-20), pages 6853-6869, XP002620001, ISSN: 0148-0227 Retrieved from the Internet: URL:http://elib.dlr.de/32127/1/jgr_101.pdf [retrieved on 2011-02-01]
- SCHUMANN ET AL: "Formation, properties and climatic effects of contrails", COMPTES RENDUS - PHYSIQUE, ELSEVIER, PARIS, FR, vol. 6, no. 4-5, 1 May 2005 (2005-05-01), pages 549-565, XP025360243, ISSN: 1631-0705 [retrieved on 2005-05-01]
- SCHRÖDER ET AL: "Ultrafine particulate jet aircraft emissions depending on fuel sulfur content and contrail processing", JOURNAL OF AEROSOL SCIENCE, PERGAMON, vol. 29, 1 September 1998 (1998-09-01), pages S561-S562, XP005884471, ISSN: 0021-8502
- Lamprecht D.: "Fischer-Tropsch fuel for use by the U.S. Military as Battlefield-Use Fuel for the future", Sasol Technology Research and Development Energy Fuels, vol. 21, no. 3 4 May 2007 (2007-05-04), pages 1448-1453, XP002620002, DOI: 10.1021/ef060607m Retrieved from the Internet: URL:http://pubs.acs.org/doi/pdf/10.1021/ef 060607m [retrieved on 2011-02-01]
- Busen R. and Schumann U.: "Visible contrail formation from fuels with different sulfur contents", DLR, Institut für Physik der Atmosphäre Geophysical Research Letters, vol. 22, no. 11 1 June 1995 (1995-06-01), pages 1357-1360, XP002620003, ISSN: 0094-8534 Retrieved from the Internet: URL:http://elib.dlr.de/31966/1/gltt-22.pdf [retrieved on 2011-02-01]

## Description

### BACKGROUND OF THE INVENTION

This disclosure relates to contrails made by the exhaust from aircraft engines. Hot exhaust from aircraft engines causes visible trails of condensed water known as contrails under known temperature and humidity conditions. For instance, the hot exhaust mixes with the cooler, moist surrounding air and causes condensation/precipitation of water as minute droplets or ice crystals. There is speculation that contrails contribute to changing the Earth's climate by containing outgoing radiation, either directly or as amplified by stimulating the formation of clouds, similar to greenhouse gases. Additionally, contrail formation may be a concern for aircraft operators that wish to minimize visible detection.

In some instances, an aircraft may avoid producing contrails by avoiding flying into contrail-forming conditions. However, depending on the aircraft, flight pattern, or other circumstances, it is not always possible to avoid contrail-forming conditions. In addition, such contrail avoidance flight patterns may be longer and/or require more total fuel to be burned, which would increase cost and produce more CO₂ with the effect of increasing rather than decreasing global warming.

Additives to the fuel or to the exhaust may be used to reduce contrail formation. For instance, the additives influence the size of the condensed water droplets or ice crystals. Droplets or ice crystals of certain sizes may not be visible. However, problems with using additives include the cost of the additives (effectively increasing the cost of the fuel which is already a significant concern in the aviation industry), the weight associated with the additives, and any reduction in engine life or performance caused by the additives.

Fischer-Tropsch jet fuels having low sulfur levels are disclosed in a technical report entitled "Alternative Jet Fuels" by Chevron, available from www.chevronglobalaviation.com

Other studies relating to sulfur levels in fuels indicate a study by Mushrush et al. reported in Petroleum Science and Technology, Vol 20, No. 5, 6, 1 January 2002, pp 561-570; and a study by Schumann et al. reported in Journal of Geophysical Research, Vol. 101, No. D3, 20 March 1996, pp 6853-6869.

US 6,162,956 discloses a Fischer-Tropsch derived distillate fraction that is blended with either a raw gas field condensate distillate fraction or a mildly hydrotreated condensate fraction to obtain a stable, inhibited distillate fuel.

### SUMMARY OF THE INVENTION

An example method of managing contrail formation of a gas turbine engine according to claim 1 includes delivering an ultra-low sulfur fuel with a desired concentration of sulfur in the ultra-low sulfur fuel to a combustor of a gas turbine engine to limit an amount of sulfur byproduct produced in an exhaust of the gas turbine engine, and predetermining the desired concentration of sulfur in the ultra-low sulfur fuel by establishing a critical threshold of sulfur byproducts in an exhaust of a gas turbine engine such that below a critical threshold, the exhaust substantially reduces contrail formation when the gas turbine engine is flying in contrail-forming conditions.

An ultra-low sulfur aviation fuel composition includes a concentration of sulfur that is less than one part per million is described.

### BRIEF DESCRIPTION OF THE DRAWINGS

The various features and advantages of the disclosed examples will become apparent to those skilled in the art from the following detailed description. The drawings that accompany the detailed description can be briefly described as follows.

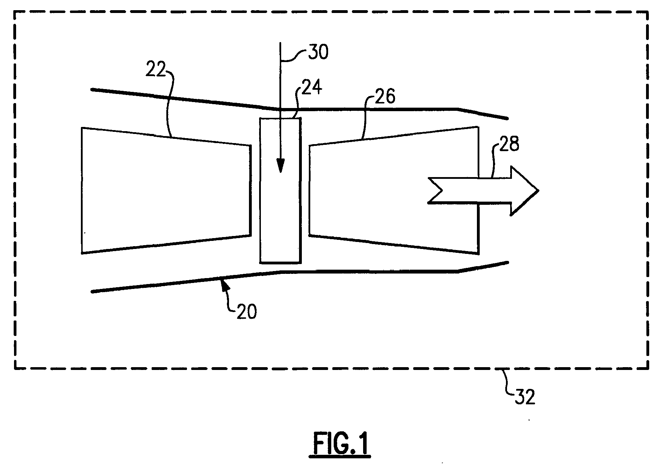

Figure 1 illustrates an example gas turbine engine utilizing an ultra-low sulfur fuel while flying in contrail-forming conditions.

### DETAILED DESCRIPTION OF THE PREFERRED EMBODIMENT

Figure 1 illustrates selected portions of an example gas turbine engine 20 that may be employed on an aircraft. In this example, the gas turbine engine 20 includes a compressor section 22, a combustor 24 for receiving compressed air from the compressor section 22, and a turbine section 26 for receiving an exhaust 28 from the combustor 24. It is to be understood that there are various types of gas turbine engines, many of which can benefit from the disclosed examples, which are not limited to the disclosed design.

The gas turbine engine 20 utilizes an ultra-low sulfur fuel 30 to manage contrail formation from the gas turbine engine 20 while flying through contrail-forming conditions 32. Typical aviation fuels include 30-3000 parts per million of sulfur. However, the ultra-low sulfur fuel 30 of the disclosed example includes a concentration of sulfur that is less than about one part per million to limit an amount of sulfur byproduct produced in the exhaust 28.
In further examples, the ultra-low sulfur fuel 30 may have a concentration of sulfur that is less than 300 parts per billion or concentration that is below detectable limits (i.e., nominally zero). The sulfur byproducts (e.g., including SO₃) may be in the form of particles, compounds, or other exhaust matter emitted in the exhaust 28.

Sulfur byproducts may act as nucleation sites for condensation of water under contrail-forming conditions. For instance, sulfur byproducts are highly hydroscopic compared to carbon or other particles in an exhaust. The sulfur byproducts, including any sulfur byproduct associated with emitted soot particles, attract water vapor molecules more readily than other types of particles in the exhaust. The sulfur byproduct may rapidly accumulate water and form droplets that lead to contrails. The amount of sulfur byproduct in the exhaust 28 is limited by utilizing the ultra-low sulfur fuel 30. The ultra-low sulfur fuel 30 thereby limits or eliminates contrail formation because there is limited sulfur byproduct in the exhaust 28 to support nucleation and water droplet formation.

Reducing or eliminating contrail formation using the ultra-low sulfur fuel 30 provides the benefits of reduced concern of aviation-induced climate change, no increase in effective fuel cost or aircraft weight from additives, no impact on fuel consumption, and reduction of particulate emission.

Desired concentrations of sulfur in the ultra-low sulfur fuel 30 for reducing or eliminating contrail formation are predetermined. Acritical threshold of sulfur byproducts in the exhaust 28 is established such that below the critical threshold, the exhaust 28 substantially reduces contrail formation when the gas turbine engine 20 is flying in the contrail-forming condition 32. In one example, the reduction in contrail formation may correspond to the degree of visibility of a contrail, average water droplet size or other parameter for judging contrail formation.

The ultra-low sulfur fuel 30 may be produced using any of a variety of methods. In one example, the ultra-low sulfur fuel 30 may be a Fischer-Tropsch synthetic paraffin fuel that is made without adding sulfur or sulfur-containing additives. In this regard, the ultra-low sulfur fuel 30 may include a concentration of sulfur that is close to zero or undetectable.

In another example, the ultra-low sulfur fuel 30 may be produced by removing sulfur from an existing type of aviation fuel. The existing fuel may be a synthetic fuel or a petroleum-based fuel, for example. For instance, a sulfur-removing device could be used to remove sulfur from the existing fuel.

Regardless of the source of the ultra-low sulfur fuel 30, one concern with using the ultra-low sulfur fuel 30 might be sulfur contamination from existing fuel supply chains. For instance, aviation fuels are typically transported through a supply chain that may handle a variety of different types of fuels. Residual amounts of one type of fuel may remain in the supply chain and intermix with subsequently transported fuels. Normally, the intermixing is insignificant and does not influence engine performance. However, mixing even a small amount of a sulfur-containing fuel with the ultra-low sulfur fuel 30 may increase the sulfur concentration above a desired/threshold concentration for contrail formation. Similarly, the gas turbine engine 20 or the aircraft fuel system may include residual sulfur-containing fuel. Therefore, the supply chain, the aircraft, and gas turbine engine 20 may require cleaning to limit contamination.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure.

## Claims

1. A method of managing contrail formation of a gas turbine engine (20), comprising:
delivering an ultra-low sulfur fuel (30) with a desired concentration of sulfur in the ultra-low sulfur fuel to a combustor (24) of a gas turbine engine (20) to limit an amount of sulfur byproduct produced in an exhaust (28) of the gas turbine engine (20), **characterised in that**:
the method further comprises predetermining the desired concentration of sulfur in the ultra-low sulfur fuel by establishing a critical threshold of sulfur byproducts in an exhaust (28) of a gas turbine engine (20) such that below the critical threshold the exhaust (28) substantially reduces contrail formation when the gas turbine engine (20) is flying in contrail-forming conditions (32).

2. The method as recited in claim 1, wherein the gas turbine engine (20) is flying in contrail-forming conditions (32).

3. The method as recited in claim 1, wherein a concentration of sulfur in the ultra-low sulfur fuel is less than one parts per million.

4. The method as recited in claim 1, wherein a concentration of sulfur in the ultra-low sulfur fuel is less than 300 parts per billion.

## Patentansprüche

1. Verfahren zum Regulieren der Bildung von Kondensstreifen eines Gasturbinentriebwerkes (20), umfassend:
Leiten eines Treibstoffes mit ultraniedrigem Schwefelgehalt (30) mit einer gewünschten Schwefelkonzentration in dem Treibstoff mit ultraniedrigem Schwefelgehalt in eine Brennkammer (24) eines Gasturbinentriebwerkes (20), um eine Menge an Schwefelbeiprodukt, das in einem Austritt (28) des Gasturbinentriebwerkes (20) erzeugt wird, zu begrenzen, **dadurch gekennzeichnet, dass**:
das Verfahren ferner das Vorgeben der gewünschten Schwefelkonzentration in dem Treibstoff mit ultraniedrigem Schwefelgehalt durch Festlegen einer kritischen Grenze für die Schwefelbeiprodukte in einem Austritt (28) des Gasturbinentriebwerkes (20) umfasst, sodass der Austritt (28) unterhalb der kritischen Grenze die Bildung von Kondensstreifen im Wesentlichen reduziert, wenn das Gasturbinentriebwerk (20) in Kondensstreifenbildungsbedingungen (32) fliegt.

2. Verfahren nach Anspruch 1, wobei das Gasturbinentriebwerk (20) in Kondensstreifenbildungsbedingungen (32) fliegt.

3. Verfahren nach Anspruch 1, wobei eine Schwefelkonzentration in dem Treibstoff mit ultraniedrigem Schwefelgehalt unter einem Parts per million beträgt.

4. Verfahren nach Anspruch 1, wobei eine Schwefelkonzentration in dem Treibstoff mit ultraniedrigem Schwefelgehalt unter 300 Parts per million beträgt.

## Revendications

1. Procédé de gestion de la formation de traînée de condensation d'un moteur à turbine à gaz (20), comprenant :
l'introduction d'un combustible à très faible teneur en soufre (30) avec une concentration désirée de soufre dans le combustible à très faible teneur en soufre dans une chambre de combustion (24) d'un moteur à turbine à gaz (20) afin de limiter une quantité de sous-produits du soufre qui est produite dans un échappement (28) du moteur à turbine à gaz (20), **caractérisé en ce que** :
le procédé comprend en outre la prédétermination de la concentration désirée de soufre dans le combustible à très faible teneur en soufre en établissant un seuil critique de sous-produits du soufre dans un échappement (28) d'un moteur à turbine à gaz (20) de sorte qu'en dessous du seuil critique, l'échappement (28) réduit substantiellement la formation de traînée de condensation lorsque le moteur à turbine à gaz (20) se trouve en vol avec des conditions propices à la formation de traînée de condensation (32).

2. Procédé selon la revendication 1, dans lequel le moteur à turbine à gaz (20) se trouve en vol avec des conditions propices à la formation de traînée de condensation (32).

3. Procédé selon la revendication 1, dans lequel une concentration de soufre dans le combustible à très faible teneur en soufre est inférieure à une particule par million.

4. Procédé selon la revendication 1, dans lequel une concentration de soufre dans le combustible à très faible teneur en soufre est inférieure à 300 particules par milliard.
